# FASCICULE DE BREVET EUROPEEN

(11) **EP 0 630 769 B1**
(45) Date de publication et mention de la délivrance du brevet: **10.09.1997**
(21) Numéro de dépôt: 94109069.8
(22) Date de dépôt: 14.06.1994
(51) Int. Cl.: B60C 23/04

(54) **Dispositif de surveillance de pneumatiques avec transmission de signaux électriques à travers les disques de roue**
Reifenüberwachungsvorrichtung mit Übertragung eines elektrischen Signals durch die Radscheibe
Tyre monitoring device with transmission of electrical signals through the wheel disc

(30) Priorité: 25.06.1993 FR 9307880
(43) Date de publication de la demande: 28.12.1994
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: Chamussy, Jean-François, F-41000 Blois (FR); Gesta, Jean-Louis, F-63119 Chateaugay (FR); Taillandier, Bernard, F-63118 Cebazat (FR)
(74) Mandataire: Bauvir, Jacques

(56) Documents cités:
- EP-A- 0 488 853
- EP-A- 0 503 296
- WO-A-89/10851
- FR-A- 2 539 679
- US-A- 3 978 448

## Description

La présente invention a pour objet un dispositif de surveillance des pneumatiques, fixé sur une roue de véhicule.

L'invention concerne la transmission des signaux utilisés dans la surveillance des pneumatiques, et notamment de leur pression ; et elle concerne plus précisément les dispositifs qui utilisent deux antennes : une antenne mécaniquement liée à la roue dans la rotation de celle-ci, dite "antenne mobile", et une antenne mécaniquement liée au porte-roue non mobile en rotation, dite "antenne fixe", ces deux antennes étant couplées de manière à transmettre dans un sens l'énergie électrique d'activation du capteur, et dans l'autre sens les signaux de mesure issus desdits capteurs.

L'invention vise à assurer une transmission fiable de l'énergie d'activation et des signaux de mesure entre un capteur de pression situé à proximité de la valve de gonflage du pneumatique et l'antenne mobile montée sur le moyeu de la roue, tout en permettant la fixation du capteur d'une manière simple et sûre, sans modifier la roue d'origine, et - bien entendu - à un coût réduit . Le système doit être compatible avec une monte des pneumatiques en simple ou en jumelé.

On connaît déjà des systèmes de transmission de signaux et des dispositifs pour leur fixation sur la roue, mais ils ne répondent pas à l'objet visé ci-dessus :

Le brevet US 5 033 295 (Bosch) décrit un système de détection de fermeture d'un manocontact en jumelé à partir de la modification de la reluctance d'un circuit secondaire, cette modification de reluctance étant perceptible par un circuit primaire accordé. Dans ce dispositif, il n'y a pas de transmission d'énergie dans le circuit secondaire. D'autre part, la disposition présentée suppose une modification des roues par l'adjonction de bobines dans l'épaisseur des disques de roues.

Le dispositif "Tyre Check" de la société Technologie Sicurezza Stradale comprend un capteur de pression fixé au disque de roue par deux pattes serrées sous deux écrous consécutifs, et raccordé à la valve et un émetteur radio couplé à un récepteur en cabine . Comme le dispositif précédent, celui-ci ne transmet pas d'énergie d'activation au capteur à partir du véhicule et fait confiance à des batteries embarquées pour assurer le fonctionnement des organes électriques. Par ailleurs, le mode de montage des pattes sous les écrous de roues présente l' inconvénient d' induire des vibrations importantes lors des serrages des écrous avec des clés à choc (serrage en usine). Ces vibrations sont susceptibles d'endommager une éventuelle électronique solidaire de ces pattes.

Le système développé par la société Michelin sous le nom de "M.T.M.", pour les véhicules de tourisme, comporte une antenne mobile montée dans le disque de roue, et une antenne fixe montée sur l'étrier du frein à disque ; ce type de montage ne pourrait se faire avec des roues équipées de freins à tambours qu'après avoir effectué d'importantes modifications aux organes de série que sont les roues et les tambours .

Dans le texte qui va suivre, on entend par "moyeu" le moyeu tournant de la roue proprement dit, ainsi que tout autre organe tournant qui lui est rattaché, tel que couronne de comptage d'un système anti blocage de roues (A.B.R.), parties tournantes de joint, etc. ; et on entend par "porte-moyeu" le porte-moyeu de la roue proprement dit, ainsi que tout autre organe fixe qui lui est rattaché, tel que récupérateur d'huile, support de capteur A.B.R., etc...

De même, on entend par "roue" l'ensemble constitué par les deux roues accolées l'une à l'autre lors d'un montage de pneumatiques en jumelés ainsi qu'une roue usuelle lors d'un montage pneumatique en simple.

Enfin, on entend par "environnement roue" l'ensemble constitué par la roue, le moyeu, le porte-moyeu et le tambour de frein.

Le dispositif de surveillance de pneumatiques, selon l'invention, est décrit dans revendication 1.

Une mode particulier de réalisation du dispositif de surveillance de pneumatiques selon l'invention consiste en ce que le capteur de mesure est fixé à l'extrémité du goujon de fixation modifié, du côté extérieur du véhicule.

De plus, à l'extrémité du goujon est placé un connecteur électrique assurant la liaison électrique entre le capteur et les conducteurs électriques traversant le goujon de fixation.

Et selon un mode de réalisation préférentiel, ledit connecteur électrique placé à l'extrémité du goujon est du type inductif.

Il est bien entendu que l'invention s'applique aux roues équipées de pneumatiques jumelés puisqu'il suffit d'utiliser un capteur de mesure avec deux voies au lieu d'une et de connecter de façon usuelle ce capteur aux valves des deux pneumatiques.

On va décrire un exemple de mise en oeuvre de l'invention donné à titre non limitatif, en se référant aux figures annexées suivantes :
- la figure 1 est une vue en demi-coupe d'une roue, de son moyeu, du tambour de frein, et du porte-moyeu, coupe passant par l'axe de la roue et l'axe d'un goujon de montage suivant l'invention ;
- la figure 2 est un schéma d'assemblage pour l'ensemble d'un véhicule poids lourd comprenant un tracteur et une remorque ;
- les figures 3 et 4 sont des schémas plus détaillés de la mise en oeuvre de l'invention sur l'ensemble du véhicule de la figure 2 ;
- la figure 5 est un détail de la figure 1 concernant l'installation des antennes fixe et mobile dans le cas d'un essieu équipé d'un capteur anti blocage de roue.

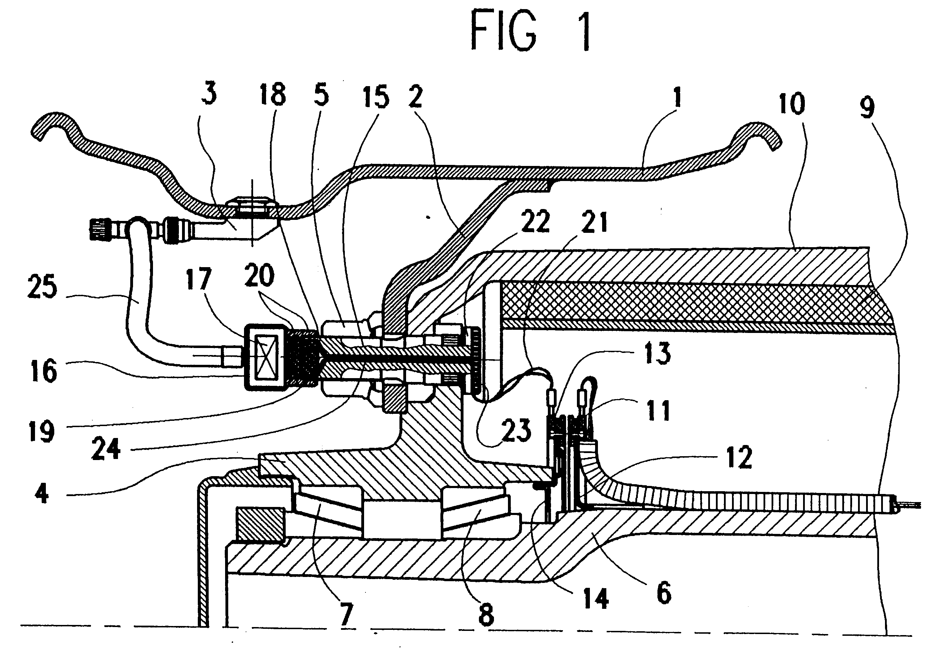

On voit sur la figure 1 la jante 1 et le disque 2 d'une roue "tubeless" avec sa valve de gonflage 3 ; cette roue est assemblée au moyeu 4 par un certain nombre de goujons (non représentés) et d'écrous, tels que 5, régulièrement répartis sur le pourtour du disque 2.

De manière connue, le moyeu 4 est monté sur le porte-moyeu 6 par l'intermédiaire de roulements à rouleaux, tels que 7 et 8 ; et les garnitures du tambour de frein 9 sont montées à l'intérieur de la cloche 10.

Les deux antennes de transmission des signaux électriques sont montées de la manière suivante : l'antenne fixe 11 est solidaire d'une patte circulaire 12 emmanchée sur le portemoyeu 6, tandis que l'antenne mobile 13 est solidaire d'une couronne 14 fixée à l'extrémité intérieure du moyeu 4.

Suivant l'invention, l'un des goujons de l'attache de la roue est modifié comme on va l'expliquer ci-après : le corps de ce goujon 15 est muni à son extrémité extérieure de moyens de fixation du boîtier 16 du capteur de pression 17, ces moyens pouvant être tout simplement l'extrémité du filetage 18 du goujon 15 ; cette même extrémité du goujon 15 est percée d'un logement 19 destiné à recevoir un connecteur 20 assurant la liaison entre le capteur 17 et les conducteurs électriques 21 ; à son extrémité intérieure, le goujon 15 est muni d'une tête plane 22 perpendiculaire à l'axe du goujon et comportant une rainure radiale 23 pour le passage des conducteurs 21 ; enfin, le corps du goujon est percé d'un trou axial 24, également pour le passage des conducteurs 21.

Il importe de souligner ici que les principales dimensions extérieures du goujon 15 restent identiques à celles du goujon standard. Pour certains modes de fixation du boîtier 16, un léger allongement du goujon 15 vers l'extérieur ainsi qu'une modification de l'extrémité rallongée pourraient être nécessaires, mais cela n'entraînerait aucun inconvénient dans la mesure où l'encombrement supplémentaire reste compatible avec les dimensions des clés à douille de serrage des roues.

Il faut également remarquer que la mise en place des éléments de mesure (capteur et son boîtier, connecteur, etc.) se fait après le serrage de l'écrou 5 et par conséquent dans des conditions de sécurité et de fiabilité optimales pour l'électronique du capteur.

La connexion électrique entre le capteur 17 et les conducteurs 21 qui vient d'être décrite peut être de type inductif, mais elle pourrait évidemment être aussi d'un autre type, et notamment de type galvanique.

Un raccord pneumatique 25, de type connu, est monté sur la valve 3 pour relier cette dernière au capteur de pression 17, tout en permettant le gonflage du pneumatique .

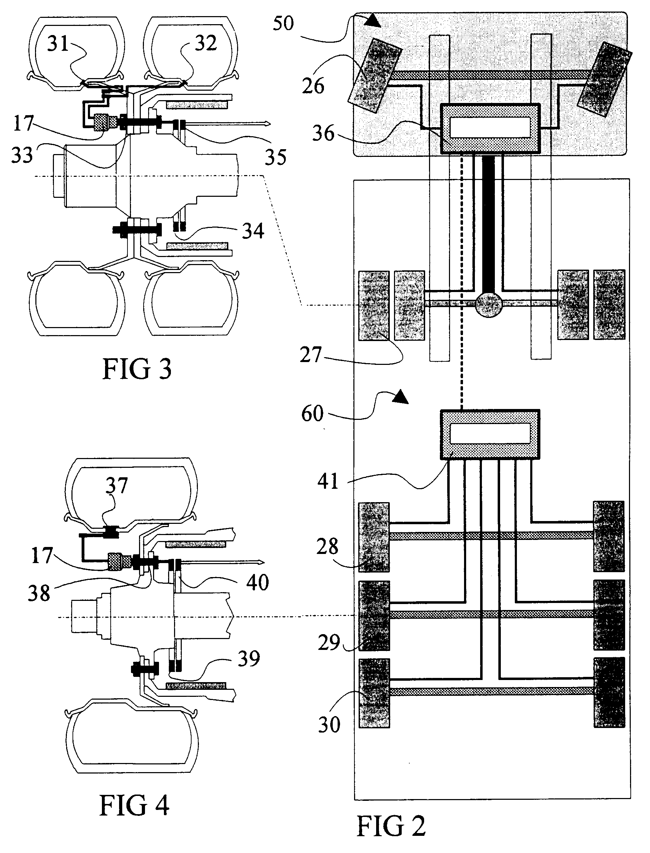

Le schéma de la figure 2 illustre un exemple d'application de l'invention à un véhicule poids lourd constitué par un tracteur 50 et une remorque 60 ; on voit, en partant de l'avant du véhicule, l'essieu directeur 26 et l'essieu arrière 27 du tracteur, ce dernier étant équipé de pneumatiques jumelés, puis les trois essieux porteurs 28, 29 et 30 de la remorque qui sont équipés de pneumatiques simples de grande largeur.

Sur les figure 3 et 4, on voit plus en détail la mise en oeuvre de l'invention qui va être décrite ci-après.

A la figure 3, les valves 31 et 32 des deux pneumatiques jumelés montés à gauche sur l'essieu arrière 27 du tracteur sont raccordées à un capteur 17 avec deux voies de mesure monté sur le goujon suivant l'invention 33 ; les signaux transmis par le connecteur et les deux antennes 34 et 35 sont ensuite traités par une unité centrale 36 installée sur le tracteur ; il en est de même pour les deux jumelés montés à droite sur cet essieu arrière.

Enfin, à la figure 4, la valve 37 de chacun des six pneumatiques montés sur les trois essieux 28, 29, 30 de la remorque est raccordée à un capteur 17 monté sur un goujon suivant l'invention 38 ; les signaux transmis par le connecteur et les deux antennes 39 et 40 sont ensuite traités par l'unité centrale 41 de la remorque.

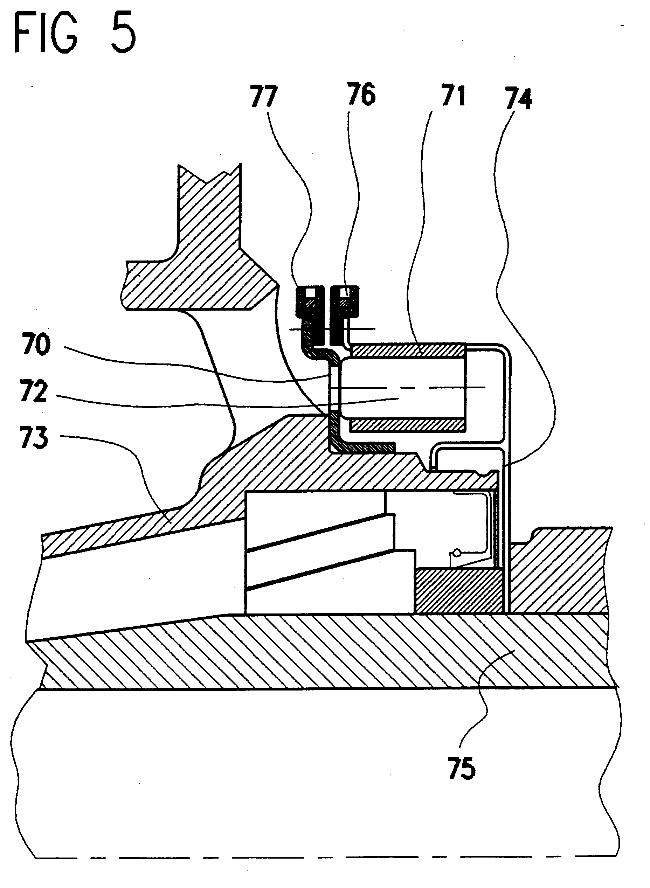

La figure 5 présente une façon avantageuse de mettre en place les antennes fixe et mobile dans le cas où l'essieu considéré est équipé d'un capteur anti blocage de roues. Le système anti blocage de roues comporte une couronne de comptage 70 et un support 71 du capteur anti blocage de roues 72. La couronne de comptage 70 est rendue solidaire du moyeu 73 tournant. Dans le montage représenté, le support 71 du capteur 72 est lui-même solidaire d'un récupérateur d'huile 74 rattaché au porte-moyeu fixe 75.

L'antenne fixe 76 est directement montée sur le support 71 légèrement modifié à cet effet. L'antenne mobile 77 est fixée à la couronne de comptage 70, elle-aussi légèrement modifiée pour cette fonction.

En résumé, l'équipement du véhicule qui vient d'être décrit, comportant huit paires d'antennes, ne requiert - pour la mise en oeuvre de l'invention - que l'utilisation de huit goujons modifiés (sur un total d'au moins quatre-vingt).

Les avantages de l'invention sont très appréciables :
- tout d'abord, le dispositif se monte très facilement, et le montage s'effectue en toute sécurité pour les organes de mesure puisque ces derniers ne sont mis en place qu'après le serrage normal de l'attache de la roue. Le système de fixation qui a été décrit (filetage) peut évidemment être remplacé par tout autre moyen connu équivalent, tel que baïonnette, enclipsage ou serrage par collier, par exemple ; il est préférable que le mode de fixation choisi permette d'avoir un diamètre identique de l'extrémité du goujon pour plusieurs diamètres dudit goujon et ainsi de limiter le nombre de types de boîtiers de capteurs 16 nécessaires ;
- d'autre part, le coût d'un goujon suivant l'invention est extrêmement modique et son montage n'entraîne aucun changement pour les organes préexistants, puisqu'il suffit de remplacer un seul des goujons de l'attache de la roue par le nouveau goujon ;
- enfin, l'invention s'applique à tous les types de roues, et aussi bien à des roues montées en simple qu'en jumelé, sans qu'il soit nécessaire de les modifier.

## Revendications

1. Dispositif de surveillance de pneumatiques, comprenant une unité centrale (36, 41) et pour chaque roue un capteur de mesure (17) relié par des moyens de liaison électrique à une antenne mobile (13, 34, 39, 77) solidaire du moyeu (4, 73) de la roue ainsi qu'une antenne fixe (11, 35, 40, 76) solidaire du porte-moyeu (6, 75) de ladite roue et couplée à ladite antenne mobile, ladite unité centrale alimentant en énergie ledit capteur et analysant les signaux de mesure dudit capteur, ledit dispositif étant caractérisé en ce que le capteur de mesure (17) est situé à proximité de la valve de gonflage (3) du pneumatique et en ce que les moyens de liaison électrique comprennent des conducteurs électriques (21) traversant un goujon de fixation (15, 33, 38) pour rejoindre l'antenne mobile (13, 34, 39, 77).

2. Dispositif de surveillance de pneumatiques selon la revendication 1 caractérisé en ce que le capteur de mesure (17) est fixé à l'extrémité du goujon de fixation (15, 33, 38), du côté extérieur du véhicule.

3. Dispositif de surveillance de pneumatiques selon la revendication 2 caractérisé en ce que à l'extrémité du goujon (15, 33, 38) est placé un connecteur électrique (20) assurant la liaison électrique entre le capteur (17) et les conducteurs électriques (21) traversant le goujon de fixation (15, 33, 38).

4. Dispositif de surveillance de pneumatiques selon la revendication 2 caractérisé en ce que le connecteur électrique (20) placé à l'extrémité du goujon (15, 33, 38) est de type inductif.

5. Dispositif de surveillance de pneumatiques selon l'une des revendications 1 à 4, fixé sur un essieu équipé d'un dispositif anti blocage de roues, caractérisé en ce que l'antenne fixe (76) est solidaire du support (71) du capteur anti blocage de roues (72).

## Claims

1. Device for monitoring tyres, comprising a central processing unit (36, 41) and for each wheel a measuring sensor (17) connected by electrical connection means to a mobile antenna (13, 34, 39, 77) integral with the hub (4, 73) of the wheel as well as a stationary antenna (11, 35, 40, 76) integral with the hub carrier (6, 75) of said wheel and coupled to said stationary antenna, said central processing unit supplying said sensor with power and analysing the measurement signals of said sensor, said device being characterised in that the measuring sensor (17) is located close to the inflation valve (3) of the tyre and in that the electrical connection means comprise electrical conductors (21) passing through a fastening bolt (15, 33, 38) for joining the mobile antenna (13, 34, 39, 77).

2. Device for monitoring tyres according to claim 1, characterised in that the measuring sensor (17) is fastened to the end of the fastening bolt (15, 33, 38) on the outside of the vehicle.

3. Device for monitoring tyres according to claim 2, characterised in that at the end of the bolt (15, 33, 38) an electrical connector (20) is placed which ensures the electrical connection between the sensor (17) and the electrical conductors (21) which pass through the fastening bolt (15, 33, 38).

4. Device for monitoring tyres according to claim 2, characterised in that the electrical connector (20) placed at the end of the bolt (15, 33, 38) is of the inductive type.

5. Device for monitoring tyres according to one of claims 1 to 4, fastened on an axle equipped with an antilocking device for wheels, characterised in that the stationary antenna (76) is integral with the support (71) of the antilocking sensor (72) for wheels.

## Patentansprüche

1. Reifenüberwachungsvorrichtung mit einer Zentraleinheit (36, 41) und für jedes Rad mit einem Meßfühler (17), der durch elektrische Verbindungsmittel mit einer beweglichen Antenne (13, 34, 39, 77) verbunden ist, die fest mit der Habe (4, 73) des Rades verbunden ist, sowie einer festen Antenne (11, 35, 40, 76), die mit dem Nabenträger (6, 75) des genannten Rades fest verbunden ist und mit der genannten, beweglichen Antenne gekoppelt ist, wobei die genannte Zentraleinheit den genannten Meßfühler mit Energie speist und die Meßsignale des genannten Meßfühlers analysiert, und die genannte Vorrichtung dadurch **gekennzeichnet** ist, daß der Meßfühler (17) in der Nähe des Aufpumpventils (3) des Reifens gelegen ist, und daß die Mittel zur elektrischen Verbindung elektrische Leiter (21) aufweisen, die einen Befestigungs-Schraubenbolzen (15, 33, 38) durchsetzen, um die bewegliche Antenne (13, 34, 39, 77) zu erreichen.

2. Reifenüberwachungsvorrichtung nach Anspruch 1, dadurch **gekennzeichnet**, daß der Meßfühler (17) am Ende des Befestigungs-Schraubenbolzens (15, 33, 38) auf der Außenseite des Fahrzeugs befestigt ist.

3. Reifenüberwachungsvorrichtung nach Anspruch 2, dadurch **gekennzeichnet**, daß am Ende des Schraubenbolzens (15, 33, 38) ein elektrischer Anschluß (20) angeordnet ist, der die elektrische Verbindung zwischen dem Meßfühler (17) und den elektrischen Leitern (21) sicherstellt, die den Befestigungs-Schraubenbolzen (15, 33, 38) durchsetzen.

4. Reifenüberwachungsvorrichtung nach Anspruch 2, dadurch **gekennzeichnet**, daß der elektrische Anschluß (20), der am Ende des Schraubenbolzens (15, 33, 38) angeordnet ist, ein induktiver Anschluß ist.

5. Reifenüberwachungsvorrichtung nach einem der Ansprüche 1 bis 4, befestigt auf einer Achse, die mit einer Rad-Anti-blockiereinrichtung ausgestattet ist, dadurch **gekennzeichnet**, daß die feste Antenne (76) fest mit dem Träger (71) des Rad-Antiblockiermeßfühlers (72) verbunden ist.
